# EUROPÄISCHE PATENTSCHRIFT

(11) **EP 2 097 682 B1**
(45) Veröffentlichungstag und Bekanntmachung des Hinweises auf die Patenterteilung: **12.02.2014**
(21) Anmeldenummer: 06829200.2
(22) Anmeldetag: 30.11.2006
(51) Int. Cl.: F24D 19/00, C02F 1/42

(54) **WASSERBEHANDLUNGSEINRICHTUNG FÜR EINE HEIZANLAGE**
WATER TREATMENT UNIT FOR A HEATING SYSTEM
DISPOSITIF DE TRAITEMENT D'EAU POUR UNE INSTALLATION DE CHAUFFAGE

(43) Veröffentlichungstag der Anmeldung: 09.09.2009
(73) Patentinhaber: Perma-Trade Wassertechnik GMBH, 71229 Leonberg (DE)
(72) Erfinder: ENDE, Dietmar, 71287 Weissach (DE); SAUTTER Michael, 71229 Leonberg (DE)
(74) Vertreter: Jeck, Anton
(86) Internationale Anmeldenummer: PCT/EP2006/011502
(87) Internationale Veröffentlichungsnummer: WO 2008/064708

(56) Entgegenhaltungen:
- EP-A- 1 431 674
- WO-A-01/30496
- DE-A1- 1 927 333
- US-A- 3 870 033
- US-A- 4 664 793
- US-A- 4 835 072

## Beschreibung

Die Erfindung betrifft eine Wasserbehandlungseinrichtung für eine Heizung.

Praktisch in jeder Heizung wird Wasser als Wärmeträgermedium verwendet. Dabei kommt es zur Wechselwirkung des Wassers und der Wasserbestandteile mit den Heizungswerkstoffen wobei schäden durch Korrosionsreaktionen und Belagsbildung entstehen, siehe zum Beispiel EP 1 431 674 A1.

Besonders durch die Steigerung der Wirkungsgrade von Heizungsanlagen wurden die Heizflächenbelastungen (kW/m²) und somit die Oberflächentemperaturen der Wärmeübertragungsflächen an der Wasserseite in den letzten Jahren zunehmend gesteigert. Dies hat zur Folge, dass eine Belagsbildung im Bereich der Flamm- und Rauchgasrohre bei modernen Heizkesseln wesentlich stärkere Auswirkungen hat, als bei älteren Modellen. Je Millimeter Belagsstärke ergeben sich Wirkungsgradverluste von bis zu 15%.

Aus diesen Gründen wird bei großen Anlagen schon immer enthärtetes bzw. entmineralisiertes Wasser eingesetzt, um den gefürchteten Kesselstein zu verhindern und um mögliche Korrosionsvorgänge weitgehend zu inhibieren. Um Letzteres zu gewährleisten, müssen zusätzlich ein erhöhter pH-Wert eingestellt und gegebenenfalls auch chemische Inhibitoren zugesetzt werden.

Was seit längerer Zeit für große Anlagen gilt, wird als Empfehlung auf Klein- und Kleinstanlagen ausgedehnt und gilt somit als Stand der Technik. Im Grundsatz bedeutet dies, dass die Richtlinie im Schadensfall zur Beurteilung herangezogen werden kann.

Derzeit wird bei Anlagen > 100kW mit einer mobilen Wasseraufbereitungsstation befüllt und gleichzeitig Konditioniermittel zur pH-Einstellung, Korrosionsinhibition und ggf. Sauerstoffbindemittel zugegeben. Bei kleineren Anlagen wird das Wasser in der Regel nicht aufbereitet, da dies zu aufwändig ist.

Es ist Aufgabe der Erfindung, eine Wasserbehandlungseinrichtung zu schaffen, mit der ein Heizungsinstallateur die Befüllung kleiner und mittlerer Heizungsanlagen mit Heizungswasser einfach durchführen kann.

Diese Aufgabe wird gelöst mit einer Wasserbehandlungseinrichtung mit einem Behälter der eine wasserdurchflossene Kammer aufweist, wobei in der Kammer lonentauscherelemente gehalten sind, und wobei die Ionentauscherelemente das durch die Kammer geleitete Wasser zumindest teilweise entmineralisieren und wobei der pH-Wert des Wasser auf einen Wert im Bereich zwischen 8 und 11 überführt wird.

Die Wasserbehandlungseinrichtung kann vom Installateur beispielsweise an die normale Trinkwasserversorgung angeschlossen werden. Das Wasser durchfließt die Kammer und wird dort mittels der Ionentauscherelemente entmineralisiert.

Gleichzeitig wird auch das Wasser in einen pH-Wert-Bereich überführt, der im Bereich zwischen 8 und 11 liegt. Auf diese Weise wird die Kesselsteinbildung verhindert oder zumindest stark verringert. Der eingestellte pH-Wert verringert gleichzeitig die Korrosionsvorgänge an den metallischen Teilen des wasserführenden Systems.

Die Wasserbehandlungseinrichtung kann vom Installateur einfach gehandhabt werden und erfordert keine weiteren Fachkenntnisse. Vorteilhafter Weise ist die Anordnung als Einwegpatrone ausgeführt, die nach dem Befüllvorgang vom Installateur entsorgt werden kann.

Gemäß einer bevorzugten Erfindungsausgestaltung ist es vorgesehen, dass der pH-Wert in der Kammer mittels der lonentauscherelemente einstellbar ist. Auf diese Weise kann der konstruktive Aufwand deutlich vereinfacht werden. Dabei lässt sich vorteilhaft die pH-Wert-Einstellung dadurch erreichen, dass in der Kammer eine Mischung aus sauren und basischen lonentauscherelementen gehalten ist. Über das Mischungsverhältnis kann der gewünschte pH-Wert exakt eingestellt werden. Eine effektive Entmineralisierung des Wassers kann dadurch erreicht werden, dass ein Teil der lonentauscherelemente schwach und ein weiteren Teil stark sauer ist.

Die stark sauren lonentauscherelemente bringen in kurzer Zeit eine schnelle Säurebildung, so dass das Wasser gleich zu Behandlungsbeginn ausreichend beeinflusst wird. Ebenso kann es vorgesehen sein, dass ein Teil der Ionentauscherelemente schwach und ein weiterer Teil stark basisch ist, um diesen Effekt auch im basischen Bereich zu erhalten.

Eine bevorzugte Erfindungsvariante kann dadurch gekennzeichnet sein, dass das Mischungsverhältnis "Anteil der stark basischen lonentauscherelemente" / "Anteil der stark schwachen Ionentauscherelemente" >1 ist.

Der Überschuss an stark basischen Ionentauscherelementen führt dazu, dass der pH-Wert in kurzer Zeit zum alkalischen Wert verschoben wird.

Dabei hat sich gezeigt, dass für die gängigsten Anwendungen die Zusammenstellung dann vorteilhaft ist, wenn vorgesehen ist, dass das Mischungsverhältnis "stark basischen lonentauscherelementen" / "stark sauren Ionentauscherelementen" > 1,3 und < 1,8 ist.

Eine bevorzugte Ausgestaltungsvariante ist dergestalt, dass zumindest ein Teil der Ionentauscherelemente von lonentauscherharz-Teilen gebildet ist. Die lonentauscherharz-Teile sind kostengünstig, in der Regel in Granulatform, zu beziehen und sie verlieren ihre Eigenschaften auch dann nicht, wenn die Wasserbehandlungseinrichtung im rauen Baustellenalltag zum Einsatz kommt. Wenn ein Granulat Verwendung findet, dann hat es sich als vorteilhaft erwiesen, wenn vorgesehen ist, dass die Ionentauscherelemente in Form eines Granulates mit einer mittleren Kerngröße im Bereich zwischen 0,5 und 1,4 mm vorliegen. Diese Teilchengröße ermöglicht eine zuverlässige Wasserbehandlung.

Wenn das wasserführende System Aluminiumwerkstoffe enthält, wird eine Wasserbehandlungseinrichtung eingesetzt, mittels der der pH-Wert auf einen Wert unter pH-Wert 9 eingestellt wird. Damit wird die Korrosion unter Aluminatbildung verhindert.

Die Wasserbehandlung kann zusätzlich dadurch effektiviert werden, wenn vorgesehen ist, dass in dem Behälter oder in einem Zusatzbehälter ein Korrosionsschutzmittel gehalten ist. Dabei kann es insbesondere vorgesehen sein, dass das Korrosionsschutzmittel einen chemischen Inhibitor, beispielsweise Molybdat oder ein Sauerstoffbindemittel aufweist.

Dabei ergibt sich eine einheitlich handhabbare Einheit, wenn vorgesehen ist, dass in dem Behälter eine wasserdurchströmte zweite Kammer angeordnet ist, in der das Korrosionschutzmittel bevorratet ist. Das Korrosionsschutzmittel kann beispielsweise flüssig oder vorzugsweise in Tablettenform verwendet werden.

Der Installateur kann die Wasserbehandlungseinrichtung dann einfach an die Heizungsanlage und/oder die Wasserversorgung anschließen, wenn vorgesehen ist, dass der Behälter einen Zulauf und einen Ablauf aufweist und dass der Ablauf und/oder der Zulauf eine Anschlusskupplung aufweist.

Um zu verhindern, dass Ionentauscherelemente mit dem durchfließenden Wasser ausgeschwemmt werden, kann die Wasserbehandlungseinrichtung dergestalt sein, dass in Strömungsrichtung hinter den Ionentauscherelementen ein Filter angeordnet ist. Damit kann auch das Heizungs(nach)füllwasser gefiltert und Schwebstoffe zurückgehalten werden. Beispielsweise hat sich ein Filter mit einer Maschenweite von ca. 50 µm als geeignet erwiesen.

Damit das Wasser in die Kammer gleichmäßig einströmt und/oder der Wasserstrom die lonentauscherelemente in der Kammer nicht verdrängt, kann es vorgesehen sein, dass in Strömungsrichtung vor den Ionentauscherelementen ein Strömungsverteiler angeordnet ist.

Eine mögliche Erfindungsvariante kann dadurch gekennzeichnet sein, dass dem Behälter eine Messeinheit zugeordnet ist, die mittelbar oder unmittelbar den Erschöpfungsgrad der lonentauscherelemente signalisiert.

Gemäß einer bevorzugten Erfindungsvariante kann es vorgesehen sein, dass im wasserdurchflossenen Bereich ein pH-Stabilisator als Puffersystem zur Stabilisierung des von den lonentauscherelementen geschaffenen pH-Wertes eingesetzt ist.

Mit dem pH-Stabilisator wird sichergestellt, dass der pH-Wert des behandelten Wassers stabil gehalten wird, so dass das Wasser unempfindlich gegen die unbeabsichtigte Zugabe einer Substanz ist, die den pH-Wert verschieben würde.

Um die Funktionalität des pH-Stabilisators sicherzustellen, ohne dass die lonentauscherelemente durch ihn beeinflusst werden, kann es erfindungsgemäß vorgesehen sein, dass der pH-Stabilisator zumindest teilweise in Strömungsrichtung hinter den lonentauscherelementen angeordnet ist.

Bevorzugter Weise kann es vorgesehen sein, dass der pH-Stabilisator in körniger oder pulvriger Form vorliegt und in einer Aufnahmeeinheit mit wasserdurchlässigen Wandungen, insbesondere bestehend aus einem Vlieswerkstoff bevorratet ist, wobei die Porosität der Wandung kleiner als der Korndurchmesser der Stabilisatorteilchen ist.

Die Aufnahmeeinheit verhindert zuverlässig eine Vermischung von pH-Stabilisator und Ionentauscherelemente. Als Aufnahmeeinheit kann beispielsweise ein Gewebe- oder Vliessäckchen zum Einsatz kommen. Dieses ist einfach herstell- und handhabbar.

Bevorzugter Weise ist es vorgesehen, dass der pH-Stabilisator ein Carbonat-Hydrogencarbonat-System, vorzugsweise ein Natriumcarbonat-Natriumhydrogencarbonat-System ist. Dieses pH-Stabilisator-System kann kostengünstig bezogen werden und eignet sich besonders für die vorliegende Anwendung.

Eine erfindungsgemäße Wasserbehandlungseinrichtung kann dergestalt sein, dass im Bereich des Zu- und/oder Abflusses der Kammer ein Strömungsbegrenzer angeordnet ist, der den Volumenstrom des Wassers begrenzt, vorzugsweise auf einen Wert V [l/h] < 200 BV · ¹/h, wobei BV den Behältervolumen der Kammer in [l] entspricht.

Der Strömungsbegrenzer stellt sicher, dass die für die pH-Wert-Einstellung erforderliche Wasserbehandlungsdauer eingehalten wird. Für die gängigen Wasserleitungssysteme hat sich dabei insbesondere eine Einstellung auf eine Wert V ≤ 150 · BV · ¹/h bewährt.

Die Erfindung wird nachfolgend anhand von in den Zeichnungen dargestellten Ausführungsbeispieles näher erläutert. Es zeigen:
- Fig. 1: eine Wasserbehandlungseinrichtung in schematischer Seitenansicht und im Schnitt,
- Fig. 2: zeigt eine weitere Ausführungsvariante einer Wasserbehandlungseinrichtung in Seitenansicht und im Schnitt.

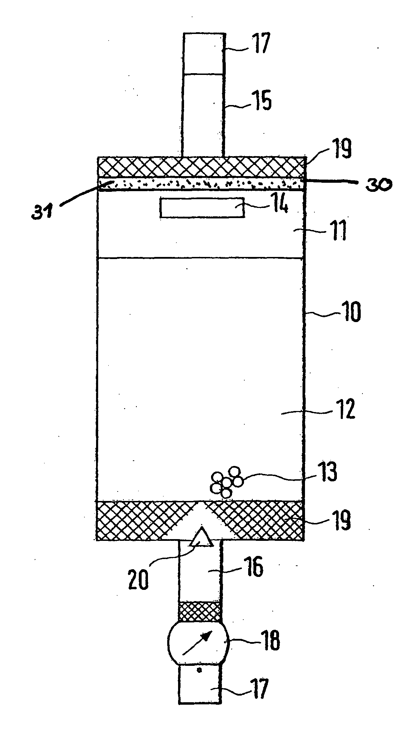

Wie die Fig. 1 erkennen lässt, weist die Wasserbehandlungseinrichtung einen Behälter 10 auf, der eine erste Kammer 11 und eine zweite Kammer 12 bildet. Dabei stehen die beiden Kammern 11 und 12 in strömungsleitender Verbindung. An den Behälter 10, der beispielsweise aus PE oder PP bestehen kann, sind ein Zulauf 16 und ein Ablauf 15 angeschlossen, beispielsweise angeschweißt. Sowohl der Zulauf 16 als auch der Ablauf 15 sind mit einer Anschlusskupplung 17 ausgerüstet. Mit dieser kann die Wasserbehandlungseinrichtung schnell und einfach an eine Wasserzufuhr beziehungsweise an den Einfüllstutzen einer Heizanlage angeschlossen werden.

Wie die Fig. 1 weiter erkennen lässt, ist in den Zulauf 16 ein Wassermengenmesser 18 integriert. Dieser ermittelt die Durchflussmenge des Wassers und gibt dem Installateur so eine Information über den Verschleißzustand der Wasserbehandlungseinrichtung. Zusätzlich oder alternativ kann auch eine Messeinrichtung verwendet werden, die das behandelte Wasser ausgangsseitig misst.

Beispielsweise kann anhand einer Stromleitfähigkeitsmessung auf die Funktionsfähigkeit der Wasserbehandlungseinrichtung rückgeschlossen werden. In der Kammer 12 ist eine Mischung aus schwach und stark sauren sowie basischen Ionentauscherelementen 13 gehalten. Mit diesen wird das durchfließende Wasser entmineralisiert und gleichzeitig ein pH-Wert zwischen 8,5 und 10,5 eingestellt. Das behandelte Wasser durchströmt anschließend die Kammer 11, in der ein chemisches Korrosionsschutzmittel 14 in Form einer Tablette gehalten ist. Das Korrosionsschutzmittel 14 gibt chemische Bestandteile in das Wasser ab. Anschließend strömt das Wasser durch den Ablauf 15 aus und in die Heizungsanlage ein. Um zu verhindern, dass mit dem Wasser mitgeführte Festkörperteilchen in die Heizungsanlage gelangen oder durch den Zulauf 16 lonentauscherelemente 13 austreten, sind ein- und ausgangsseitig am Behälter 10 jeweils ein Filter 19 vorgesehen.

Ein gleichmäßiger Wassereintritt in die Kammer 12 wird mit einem Strömungsverteiler 20 erreicht.

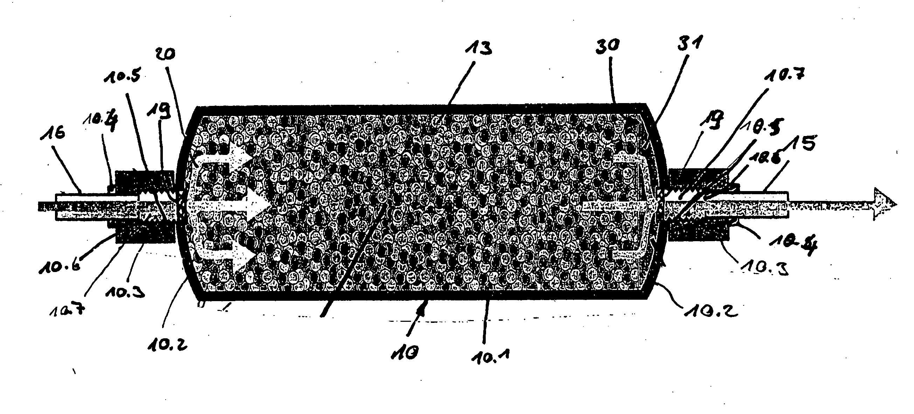

Die Fig. 2 zeigt eine Wasserbehandlungseinrichtung mit einem Behälter 10, der im Wesentlichen von einem Rohrabschnitt 10.1 gebildet ist. Der Rohrabschnitt 10.1 ist an seinen längsseitigen Enden mittels Endkappen 10.2 verschlossen. Dabei sind die Endkappen 10.2 mit den Rohrenden verschweißt. Die konvexen gewölbten Endkappen 10.2 tragen Stutzen 10.3, die mit einem Innengewinde 10.5 versehen sind. Mittels des Innengewindes 10.5 wird eine räumliche Verbindung zwischen der Umgebung und dem von dem Behälter 10 umschlossenen Innenraum geschaffen. Der Stutzen 10.3 ist vorzugsweise mit der Endkappe 10.2 einteilig in Form eines Spritzgussteiles aus Kunststoff verbunden. In das Innengewinde 10.5 des Stutzens 10.3 kann ein Filterelement 19 eingelegt werden, das ein Ausschwemmen der lonentauscherelemente 13 verhindert. Hierzu weist der Stutzen 10.3 eine Schulter auf, an der sich das Filterelement 19 abstützt.

Auf der der Schulter abgekehrten Seite wird das Filterelement 19, das als ein den Stutzenöffnungsquerschnitt überdeckendes Sieb ausgebildet ist mit einem Einschraubeinsatz 10.7 fixiert.

Der Einschraubeinsatz 10.7 ist mit einem Außengewinde in das Innengewinde 10.5 eingeschraubt. Die Einsschraubbewegung wird mittels eines Flansches 10.6 begrenzt. Dieser liegt in der Einschraubstellung stirnseitig am Stutzen 10.3 an. Zur Abdichtung des Einschraubeinsatzes 10.7 ist eine umlaufende Nut im Einschraubeinsatz 10.7 vorgesehen, in die eine O-Ring-Dichtung eingelegt ist. Diese liegt dichtend an der Innenwandung des Stutzens 10.3 an. An den das Außengewinde bildenden Stutzenabschnitt schließt sich ein Rohrstück an, das den Zulauf 16 bzw. Ablauf 15 bildet. Der Stutzen 10.3 ist mit einer Durchgangsbohrung ausgestattet, um den Wasserfluss zu ermöglichen (siehe Pfeildarstellung). Der Flansch 10.6, der Rohrabschnitt und der das Außengewinde tragende Stutzenabschnitt sind einteilig als Kunststoffteil ausgebildet. Der Flansch 10.6 kann eine Werkzeugaufnahme aufweisen, die ein Einschraubwerkzeug aufnimmt.

Der Behälter 10 umschließt eine Kammer in der die Mischung, bestehend aus sauren und basischen lonentauscherelementen 13 in Granulatform untergebracht ist. Dabei sind insbesondere auch starke basische und starke saure Ionentauscherelemente 13 im Mischungsverhältnis im Bereich zwischen 1,3 und 1,6 verwendet. Der Überschuss an stark basischen Ionentauscherelementen 13 führt zu einer schnellen Verschiebung des durchfließenden Wassers hin zum alkalischen pH-Wert. Zusätzlich können bevorzugt auch noch schwach basische und schwach saure lonentauscherelemente 13 für eine möglichst lange Lebensdauer der lonentauscherelement-Mischung eingesetzt sein.

Im Bereich des Ablaufes 15 und somit in Strömungsrichtung hinter den Ionentauscherelementen 13 ist eine Aufnahmeeinheit in Form eines aus Vliesstoff bestehenden Beutels eingelegt. Dabei überdeckt der Beutel zumindest den Bereich des Wasseraustrittes, so dass das gesamte behandelte oder zumindest ein wesentlicher Teil des Wassers durch den Beutel hindurch geführt wird.

In der Aufnahmeeinheit wird ein pH-Stabilisator in Pulver- oder Granulatform gehalten.

Am Strömungseingang ist, wie bei dem Ausführungsbeispiel gemäß Fig. 1 ein Strömungsverteiler 20 eingesetzt, der für eine möglichst gleichmäßige Durchströmung des vom Behälter 10 umschlossenen Kammervolumens sorgt, um die Lebensdauer der Ionenaustauscherelemente 13 möglichst effektiv und gleichmäßig auszunutzen.

Die beiden Endkappen 10.2 mit den angeformten Stutzen 10.3 sind zur Verringerung des Teileaufwandes baugleich ausgeführt. Ebenso sind die in die Stutzen 10.3 eingeschraubten Einschraubeinsätze 10.7 baugleich.

## Patentansprüche

1. Wasserbehandlungseinrichtung für eine Heizanlage mit einem Behälter (10), der eine wasserdurchflossene Kammer (12) aufweist, wobei in der Kammer (12) lonentauscherelemente (13) gehalten sind, wobei die lonentauscherelemente (13) das durch die Kammer (12) geleitete Wasser zumindest teilweise entmineralisieren und wobei der pH-Wert des Wasser auf einen Wert im Bereich zwischen 8 und 11 überführt wird.

2. Wasserbehandlungseinrichtung nach Anspruch 1,
**dadurch gekennzeichnet,**
**dass** der pH-Wert in der Kammer (12) mittels der lonentauscherelemente (13) einstellbar ist.

3. Wasserbehandlungseinrichtung nach Anspruch 1 oder 2,
**dadurch gekennzeichnet,**
**dass** in der Kammer (12) eine Mischung aus sauren und basischen lonentauscherelemente (13) gehalten ist, und/oder
**dass** ein Teil der lonentauscherelemente (13) schwach und ein weiteren Teil stark sauer ist, und/oder
**dass** ein Teil der lonentauscherelemente (13) schwach und ein weiterer Teil stark basisch ist.

4. Wasserbehandlungseinrichtung nach Anspruch 3,
**dadurch gekennzeichnet,**
**dass** das Mischungsverhältnis "Anteil der stark basischen lonentauscherelemente (13)" / "Anteil der stark sauren lonentauscherelemente (13)" >1 ist, insbesondere > 1,3 ist.

5. Wasserbehandlungseinrichtung nach einem der Ansprüche 1 bis 4,
**dadurch gekennzeichnet,**
**dass** zumindest ein Teil der Ionentauscherelemente (13) von lonentauscherharz-Teilen gebildet ist.

6. Wasserbehandlungseinrichtung nach einem der Ansprüche 1 bis 5,
**dadurch gekennzeichnet,**
**dass** die Ionentauscherelemente (13) in Form eines Granulates mit einer mittleren Korngröße im Bereich zwischen 0,5 und 1,4 mm vorliegen.

7. Wasserbehandlungseinrichtung nach einem der Ansprüche 1 bis 6,
**dadurch gekennzeichnet,**
**dass** der pH-Wert des Wassers auf einen Wert < 9 überführt wird.

8. Wasserbehandlungseinrichtung nach einem der Ansprüche 1 bis 7,
**dadurch gekennzeichnet,**
**dass** in dem Behälter (10) oder in einem Zusatzbehälter ein Korrosionsschutzmittel (14) gehalten ist.

9. Wasserbehandlungseinrichtung nach Anspruch 8,
**dadurch gekennzeichnet,**
**dass** das Korrosionsschutzmittel (14) einen chemischen Inhibitor, beispielsweise Molybdat oder ein Sauerstoffbindemittel aufweist.

10. Wasserbehandlungseinrichtung nach Anspruch 8 oder 9,
**dadurch gekennzeichnet,**
**dass** in dem Behälter (10) eine wasserdurchströmte zweite Kammer (12) an geordnet ist, in der das Korrosionschutzmittel (14) bevorratet ist.

11. Wasserbehandlungseinrichtung nach einem der Ansprüche 1 bis 10,
**dadurch gekennzeichnet,**
**dass** der Behälter (10) einen Zulauf (16) und einen Ablauf (15) aufweist und dass der Ablauf (15) und/oder der Zulauf (16) eine Anschlusskupplung (17) aufweist, und/oder
**dass** im Bereich des Zu- und/oder Abflusses der Kammer (12) ein Strömungsbegrenzer angeordnet ist, der den Volumenstrom des Wassers (V) begrenzt, vorzugsweise auf einen Wert V [l/h] < 200 BV · ¹/h, insbesondere < 150 BV ¹/h, wobei BV den Behältervolumen der Kammer (12) in [l] entspricht.

12. Wasserbehandlungseinrichtung nach einem der Ansprüche 1 bis 11,
**dadurch gekennzeichnet,**
**dass** in Strömungsrichtung hinter den lonentauscherelementen (13) ein Filter (19) angeordnet ist, und/oder
**dass** in Strömungsrichtung vor den lonentauscherelementen (13) ein Strömungsverteiler angeordnet ist, und/oder
**dass** dem Behälter (10) eine Messeinheit (18) zugeordnet ist, die mittelbar oder unmittelbar den Verschleißzustand der lonentauscherelemente (13) signalisiert.

13. Wasserbehandlungseinrichtung nach einem der Ansprüche 1 bis 12,
**dadurch gekennzeichnet,**
**dass** im wasserdurchflossenen Bereich ein pH-Stabilisator (31) als Puffersystem zur Stabilisierung des von den lonentauscherelementen (13) geschaffenen pH-Wertes eingesetzt ist.

14. Wasserbehandlungseinrichtung nach Anspruch 13,
**dadurch gekennzeichnet,**
**dass** der pH-Stabilisator (31) zumindest teilweise in Strömungsrichtung hinter den lonentauscherelementen (13) angeordnet ist.

15. Wasserbehandlungseinrichtung nach Anspruch 13 oder 14,
**dadurch gekennzeichnet,**
**dass** der pH-Stabilisator (31) in körniger oder pulvriger Form vorliegt und in einer Aufnahmeeinheit (30) mit wasserdurchlässigen Wandungen, insbesondere bestehend aus einem Vlieswerkstoff bevorratet ist, wobei die Porosität der Wandung kleiner als der Korndurchmesser der Stabilisatorteilchen ist, und/oder
**dass** der pH-Stabilisator ein Carbonat-Hydrogencarbonat-System, vorzugsweise ein Natriumcarbonat-Natriumhydrogencarbonat-System ist.

## Claims

1. Water treatment apparatus for a heating system, comprising a container (10) which has a chamber (12) traversed by water flow, with ion exchange elements (13) held in the chamber (12), the ion exchange elements (13) at least partly demineralizing the water passed through the chamber (12), and the pH of the water being converted to a value in the range between 8 and 11.

2. Water treatment apparatus according to Claim 1, **characterized in that** the pH in the chamber (12) is adjustable by means of the ion exchange elements (13).

3. Water treatment apparatus according to Claim 1 or 2, **characterized in that** a mixture of acidic and basic ion exchange elements (13) is held in the chamber (12), and/or **in that** a part of the ion exchange elements (13) is weakly acidic and a further part is strongly acidic, and/or **in that** a part of the ion exchange elements (13) is weakly basic and a further part is strongly basic.

4. Water treatment apparatus according to Claim 3, **characterized in that** the "fraction of strongly basic ion exchange elements (13)"/"fraction of strongly acidic ion exchange elements (13)" mixing ratio is > 1, more particularly > 1.3.

5. Water treatment apparatus according to any of Claims 1 to 4, **characterized in that** at least part of the ion exchange elements (13) is formed by ion exchange resin particles.

6. Water treatment apparatus according to any of Claims 1 to 5, **characterized in that** the ion exchange elements (13) are in the form of granules having an average particle size in the range between 0.5 and 1.4 mm.

7. Water treatment apparatus according to any of Claims 1 to 6, **characterized in that** the pH of the water is converted to a value < 9.

8. Water treatment apparatus according to any of Claims 1 to 7, **characterized in that** a corrosion inhibitor (14) is held in the container (10) or in an ancillary container.

9. Water treatment apparatus according to Claim 8, **characterized in that** the corrosion inhibitor (14) comprises a chemical inhibitor, for example molybdate or an oxygen binder.

10. Water treatment apparatus according to Claim 8 or 9, **characterized in that** a second chamber (12) traversed by a stream of water and accommodating the corrosion inhibitor (14) is arranged in the container (10).

11. Water treatment apparatus according to any of Claims 1 to 10, **characterized in that** the container (10) has an inlet (16) and an outlet (15) and **in that** the outlet (15) and/or the inlet (16) have/has a connection coupling (17), and/or **in that** a flow limiter is arranged in the region of the inlet and/or outlet of the chamber (12) and limits the volume flow of the water (V), preferably to a V [l/h] value < 200 CV · ¹/h, more particularly < 150 CV · ¹/h, where CV corresponds to the container volume of the chamber (12) in [1].

12. Water treatment apparatus according to any of Claims 1 to 11, **characterized in that** a filter (19) is arranged downstream of the ion exchange elements (13), and/or **in that** a flow distributor is arranged upstream of the ion exchange elements (13), and/or **in that** the container (10) is assigned a measuring unit (18) which directly or indirectly signals the wear status of the ion exchange elements (13).

13. Water treatment apparatus according to any of Claims 1 to 12, **characterized in that** in the region traversed by a flow of water, a pH stabilizer (31) is used as a buffer system for stabilizing the pH brought about by the ion exchange elements (13).

14. Water treatment apparatus according to Claim 13, **characterized in that** the pH stabilizer (31) is arranged at least partly downstream of the ion exchange elements (13).

15. Water treatment apparatus according to Claim 13 or 14, **characterized in that** the pH stabilizer (31) is in particulate or powdery form and is accommodated in a receiving unit (30) having water-permeable walls, consisting more particularly of a nonwoven material, the porosity of the wall being smaller than the particle diameter of the stabilizer particles, and/or **in that** the pH stabilizer is a carbonate-hydrogencarbonate system, preferably a sodium carbonate-sodium hydrogencarbonate system.

## Revendications

1. Dispositif pour le traitement de l'eau destiné à une installation de chauffage, avec un réservoir (10) qui comporte un compartiment (12) dans lequel afflue de l'eau, dans le compartiment (12) étant maintenus des éléments échangeurs d'ions (13), les éléments échangeurs d'ions (13) déminéralisant au moins en partie l'eau dirigée à travers le compartiment (12) et la valeur pH de l'eau étant transférée à une valeur de l'ordre compris entre 8 et 11.

2. Dispositif pour le traitement de l'eau selon la revendication 1,
**caractérisé en ce que**
la valeur pH dans le compartiment (12) est réglable au moyen des éléments échangeurs d'ions (13).

3. Dispositif pour le traitement de l'eau selon la revendication 1 ou la revendication 2,
**caractérisé en ce que**
dans le compartiment (12) est maintenu un mélange d'éléments échangeurs d'ions (13) acides et basiques et/ou
**en ce qu'**une partie des éléments échangeurs d'ions (13) est faiblement acide et une autre partie est fortement acide et/ou
**en ce qu'**une partie des éléments échangeurs d'ions (13) est faiblement basique et une autre partie est fortement basique.

4. Dispositif pour le traitement de l'eau selon la revendication 3,
**caractérisé en ce que**
le rapport de mélange « part des éléments échangeurs d'ions (13) fortement basiques » / « part des éléments échangeurs d'ions fortement acides (13) » est > 1, notamment > 1,3.

5. Dispositif pour le traitement de l'eau selon l'une quelconque des revendications 1 à 4,
**caractérisé en ce qu'**
au moins une partie des éléments échangeurs d'ions (13) est formée de particules de résine échangeuse d'ions.

6. Dispositif pour le traitement de l'eau selon l'une quelconque des revendications 1 à 5,
**caractérisé en ce que**
les éléments échangeurs d'ions (13) se présentent sous la forme de granulés d'une grosseur de grain moyenne de l'ordre compris entre 0,5 et 1,4 mm.

7. Dispositif pour le traitement de l'eau selon l'une quelconque des revendications 1 à 6,
**caractérisé en ce que**
la valeur pH de l'eau est transférée à une valeur < 9.

8. Dispositif pour le traitement de l'eau selon l'une quelconque des revendications 1 à 7,
**caractérisé en ce que**
dans le réservoir (10) ou dans un réservoir supplémentaire est maintenu un produit anticorrosion (14).

9. Dispositif pour le traitement de l'eau selon la revendication 8,
**caractérisé en ce que**
le produit anticorrosion (14) comporte un inhibiteur chimique, par exemple du molybdate ou un liant d'oxygène.

10. Dispositif pour le traitement de l'eau selon la revendication 8 ou la revendication 9,
**caractérisé en ce que**
dans le réservoir (10) est disposé un deuxième compartiment (12) dans lequel afflue de l'eau dans lequel est stocké le produit anticorrosion (14).

11. Dispositif pour le traitement de l'eau selon l'une quelconque des revendications 1 à 10,
**caractérisé en ce que**
le réservoir (10) comporte une arrivée (16) et une évacuation (15) et **en ce que** l'évacuation (15) et/ou l'arrivée (16) comporte un accouplement de raccord (17), et/ou
**en ce que** dans la zone de l'entrée et/ou de la sortie du compartiment (12) est disposé un limiteur de flux qui limite le débit volumétrique de l'eau (V), de préférence à une valeur V [1/h] < 200 BV · ¹/h, notamment < 150 BV · ¹/h, BV correspondant au volume du réservoir dans le compartiment (12) en [1].

12. Dispositif pour le traitement de l'eau selon l'une quelconque des revendications 1 à 11,
**caractérisé en ce qu'**
en direction de l'écoulement, un filtre (19) est disposé derrière les éléments échangeurs d'ions (13) et/ou
**en ce qu'**en direction de l'écoulement, un distributeur de flux est disposé devant les éléments échangeurs d'ions (13), et/ou
**en ce qu'**au réservoir (10) est associée une unité de mesure (18) qui signale indirectement ou directement l'état d'usure des éléments échangeurs d'ions (13).

13. Dispositif pour le traitement de l'eau selon l'une quelconque des revendications 1 à 12,
**caractérisé en ce que**
dans la zone dans laquelle afflue de l'eau est utilisé un stabilisateur de pH (31), en tant que système tampon pour la stabilisation de la valeur pH créée par les éléments échangeurs d'ions (13).

14. Dispositif pour le traitement de l'eau selon la revendication 13,
**caractérisé en ce que**
le stabilisateur de pH (31) est disposé au moins en partie derrière les éléments échangeurs d'ions (13), en direction de l'écoulement.

15. Dispositif pour le traitement de l'eau selon la revendication 13 ou la revendication 14,
**caractérisé en ce que**
le stabilisateur de pH (31) se présente sous forme granuleuse ou pulvérulente et est stocké dans une unité réceptrice (30) avec des parois perméables à l'eau, constituées notamment d'une matière en non-tissé, la porosité de la paroi étant inférieure au diamètre des grains des particules de stabilisateur, et/ou
**en ce que** le stabilisateur de pH est un système carbonate/hydrogénocarbonate, de préférence un système carbonate de sodium/hydrogénocarbonate de sodium.
